# EUROPEAN PATENT APPLICATION

(11) **EP 1 505 578 A2**
(43) Date of publication of application: **09.02.2005**
(21) Application number: 04018701.5
(22) Date of filing: 06.08.2004
(51) Int. Cl.: G11B 7/005

(54) **Apparatus and method for detecting land prepit**

(30) Priority: 08.08.2003 JP 2003206978
(71) Applicant: Pioneer Corporation, Meguro-ku, Tokyo (JP)
(72) Inventor: Tawaragi, Yuji c/o Pioneer Corporation, Tokorozawa-shi Saitama (JP); Kawano, Eisaku c/o Pioneer Corporation, Tokorozawa-shi Saitama (JP); Shimoda, Yoshitaka c/o Pioneer Corporation, Tokorozawa-shi Saitama (JP); Suzuki, Shinji c/o Pioneer Corporation, Tokorozawa-shi Saitama (JP); Shimizu, Akira c/o Pioneer Corporation, Tokorozawa-shi Saitama (JP)
(74) Representative: Reinhard - Skuhra - Weise & Partner GbR

(57) **Abstract**

A filter generates a received-light signal LAD2 from which impulse components TR included in a received-light LAD1 have been removed. A filter generates a received-light signal LBC2 from which impulse components TR included in a received-light LBC1 have been removed. Asubtracter subtracts a received-light signal WBC from a received-light signal WAD, thereby generating a radial push-pull signal WPP. A comparator compares the radial push-pull signal WPP from which the impulse components have been removed with a reference level VT, thereby detecting a land prepit.

## Description

### BACKGROUND OF THE INVENTION

### 1. FIELD OF THE INVENTION

The present invention relates to an apparatus and method for detecting a land prepit from a recording medium on which recording tracks and in which land prepits have been previously formed.

### 2. DESCRIPTION OF THE RELATED ART

A laser beam possesses a characteristic of having a single wavelength (i.e., being monochrome), very high stability, and an aligned phase. When such a laser beam is radiated on a reflection surface having irregularities, the intensity of reflected light changes greatly in accordance with the irregularities. A laser disk, a compact disk, and a DVD (digital versatile disk) are available as recording mediums in which irregularities called pits are formed in a reflection surface and information is stored by utilization of the characteristics.

Development of a DVD has been started with a view toward rendering compact a laser disk having a diameter of 30 cm. However, if a DVD is made compact to the same size as that of a compact disk while the picture quality and recording time are maintained the same as those of the laser disk, the DVD can be diverted to large-capacity digital memory. Currently available DVDs include DVD-RAM (Digital Versatile Disk Random Access Memory) intended for usewith a computer, DVD-RW (Digital Versatile Disk Re-Recordable) intended for use in audiovisual equipment, DVD-R (Digital Versatile Disk Recordable), DVD+RW, and DVD+R, and their formats change depending on their applications.

A scheme used for pre-formatting the DVD-R and the DVD-RW is classified into a wobble groove scheme and a land prepit scheme. Grooves, which are trenches to be used for guiding a light beam, are formed in a recording medium, such as a DVD-R or a DVD-RW, and data are recorded in the grooves. Wobbles are formed by imparting undulations to the grooves at a constant cycle, and land prepits are formed at predetermined positions between the grooves. Moreover, in some DVD-Rs and DVD-RWs, the grooves are locally changed, to thereby form land prepits. In the DVD-R and the DVD-RW, address data pertaining to tracks employed at the time of recording operation are represented by the wobbles and land prepits. The land prepits are also used for controlling the phase of a recording clock signal used for recording operation. Therefore, an apparatus for recording and reproducing data on and from a DVD-R and DVD-RW is provided with a built-in land prepit detecting apparatus for detecting land prepits from a recording medium.

Multipulse modulation is generally used for modulating a light beam at the time of recording data on the DVD-R and DVD-RW. In the case of the DVD-R, two different types of light beams having different power; that is, recording power, and reproduction power, which is lower than the recording power, are used. Settings are made such that the light beam falls partially on a land as well as on the groove, and reflected light derived from the thus-radiated light beam is received through use of a four-part split detector, and two received-light signals are generated by adding together respective pairs of the four received signals. A radial push-pull signal, which corresponds to a difference between the thus-produced two received-light signals, is compared with a predetermined level, whereby a land prepit is detected.

When such a push-pull signal is used, unwanted noise, which is a transient component, develops because of responsivity of a circuit which determines a difference between the two received-light signals. In particular, in a space period during which lower reproduction power is used, a noise component becomes equal in level to the land prepit, thereby raising a problem of erroneous detection of noise as a land prepit.

In order to solve such a problem, according to JP-2002-304733, two received-light signals are not subjected to sample-holding but are subtracted from each other during a mark period in recording operation, to thereby generate a first push-pull signal; a land prepit is detected on the basis of the first push-pull signal; and segments of the signal during which noise would arise in the result of detection are masked, thereby preventing occurrence of erroneous detection. During a space segment of the signal, the radial push-pull signal is caused to pass during only a gate segment, which is set to be shorter than the space segment so as to avoid the segment during which noise would arise. In segments other than the gate segments, control operation is performed so as to hold the radial push-pull signal, to thereby generate a second push-pull signal. On the basis of this signal, a land prepit is detected, thereby preventing erroneous detection of land prepits, which would be attributable to the influence of noise, thereby preventing occurrence of erroneous detection of a land prepit.

As in the case of the related-art technique, the technique for masking the segments of a signal before and after a timing. at which switching is effected between the mark and the space. to thus eliminate the influence of noise indispensably requires management and control of time of a signal for which gate segments are to be generated. Time management of such a signal is comparatively easy at a low-speed recording operation such as 1x speed. However, during a high-speed recording operation; e.g., 4x speed or 8x speed recording operation, the mark and space segments become shorter, but the noise segments depend on the respons ivity of the circuit and hence become substantially constant or increase. Therefore, a proportion of time during which the push-pull signal is occupied by noise increases, and hence segments which are not to be masked substantially disappear. Consequently, effective signal segments of the first and second push-pull signals become drastically diminished, thereby raising a problem of rendering detection of land prepits practically impossible. Moreover, timing control during the masking period is complicated and severe, thereby raising a problem of the difficulty of implementing timing control operation.

The first push-pull signal includes an impulse component developing in an initial phase of formation of a mark, thereby raising a problem of difficulty in setting a level to be used for detecting a land prepit.

### SUMMARY OF THE INVETION

It is an object of the invention to provide with a land prepit detecting apparatus and method which enable accurate extraction of a land prepit signal during high-speed recording operation without being affected by the noise developing in association with changes in a recording signal and an impulse component developing in the initial phase of formation of a mark.

According to first aspect of the invention, a land prepit detecting apparatus which radiates a light beam corresponding to a recording signal onto a recording medium having recording tracks and land prepits previously formed thereon, to thus detect the land prepits, the apparatus comprising: first and second light-receiving elements which are divided at least into sub-divisions by split lines corresponding to the direction of the recording track and which receive reflected light formed from the light beam radiated onto the recording medium; computation device for generating a radial push-pull signal on the basis of outputs from the first and second amplitude control device; detection device which compares the radial push-pull signal with a predetermined reference value, to thereby detect the land prepit during a period of irradiation of power corresponding to a mark section; and filtering device which is interposed between the first and second light-receiving elements and the detection device andwhich attenuates an impulse component developing in the initial phase of formation of a mark in association with a variation in the recording signal.

According to second aspect of the invention, a land prepit detecting method comprising: a radiation step of radiating a light beam corresponding to a recording signal on a recording medium having recording tracks and land prepits previously formed thereon; a light receiving step of receiving reflected light formed from the light beam radiated onto the recording medium, through use of light-receiving elements which are divided at least into sub-divis ions by split lines corresponding to the direction of the recording track; a push-pull signal generation step of generating a radial push-pull signal on the basis of outputs obtained after amplitude control; and a detection step of detecting the land prepit during a period of irradiation of power corresponding to a mark section by comparing the radial push-pull signal with a predetermined reference value, wherein an impulse component attenuation step is provided before the detection step, for attenuating an impulse component developing in the initial phase of formation of a mark in association with a variation in the recording signal through filtering operation.

### BRIEF DESCRIPTION OF THE DRAWINGS

These and other objects and advantages of this invention will become more fully apparent from the following detailed description taken with the accompanying drawings in which:
Figs. 1A to 1C are waveform diagrams used for describing the overview of an embodiment of the present invention;
Fig. 2 is a view for describing regions for receiving reflected light made of a light beam radiated on a recording medium;
Fig. 3 is a view showing a received-light signal employed when a mark is recorded at the position of a land prepit formed in a land;
Fig. 4 is a perspective cross-sectional view of a disk according to a first embodiment of the invention;
Fig. 5 is a schematic view showing a format at which preliminary information and rotation control data, both having been stored in the disk beforehand, are to be recorded;
Fig. 6 is a block diagram showing a schematic configuration of a disk recording and reproduction apparatus to which a land prepit detecting apparatus of the first embodiment of the invention is applied;
Fig. 7 is a block diagram showing the internal configuration of the land prepit detecting apparatus shown in Fig. 6;
Fig. 8 is a view showing an example of a filtering characteristic of a filter shown in Fig. 7;
Fig. 9 is a block diagram showing the internal configuration of an AGC circuit shown in Fig. 7;
Figs. 10A to 10H are waveform diagrams for describing operation of the land prepit detecting apparatus of the first embodiment of the invention;
Figs. 11A to 11C are views for describing a relationship between the filtering characteristic and the radial push-pull signal;
Figs. 12A to 12F are views for describing a relationship between the filtering characteristic and the radial push-pull signal;
Fig. 13 is a block diagram showing another internal configuration of the land prepit detecting apparatus of the first embodiment of the invention;
Fig. 14 is a block diagram showing the internal configuration of a land prepit detecting apparatus according to a second embodiment of the present invention;
Fig. 15 is a block diagram showing the internal configuration of the AGC circuit shown in Fig. 14;
Fig. 16 is a view showing an example additional characteristic of a filter;
Fig. 17 is a view showing an example filtering characteristic to which the filtering characteristic shown in Fig. 16 is added;
Fig. 18 is a view showing another example additional characteristic of a filter; and
Fig. 19 is a view showing an example filtering characteristic to which the filtering characteristic shown in Fig. 18 is added.

### DESCRIPTION OF THE PREFERRED EMBODIMENTS

Preferred embodiments of a land prepit detecting apparatus according to the present invention will be described in detail hereinbelow by reference to the accompanying drawings.

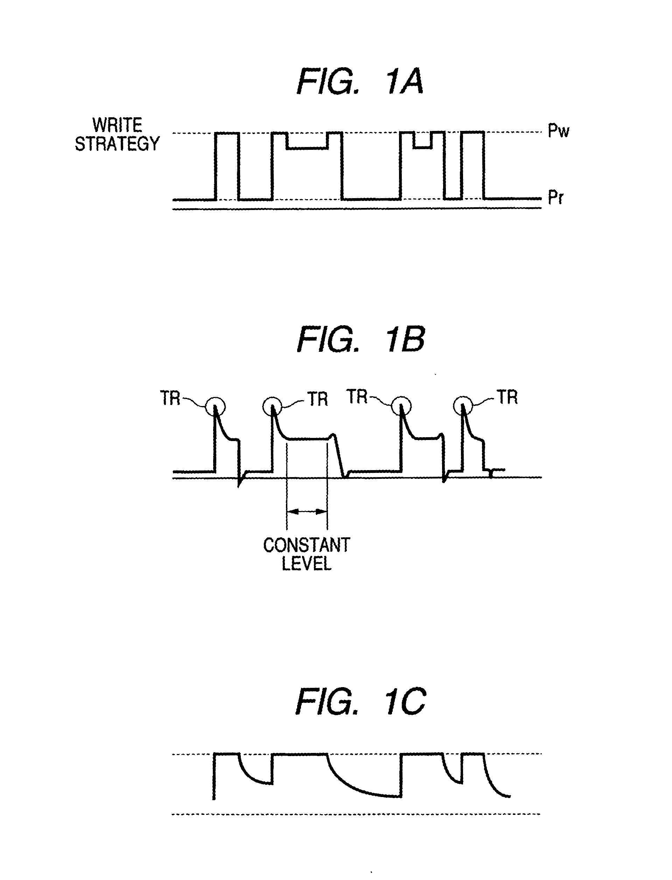

The overview and features of a land prepit detecting apparatus according to the present invention will be described by reference to Figs. 1 through 3.

The present embodiment is directed toward high-speed recording operation, such as a 4x recording operation, 8x recording operation, or 16x recording operation and is based on the premise that only a land prepit in a mark section is detected by neglecting a land prepit in a space section where a received-light signal has a low level. Since the level of the received-light signal in the mark section is sufficiently larger than noise induced by responding action of a circuit, there is no necessity for taking into consideration erroneous detection of a land prepit, which would otherwise be caused by noise. Specifically, elimination of influence of noise through use of a circuit for time management such as that employed in the related art becomes unnecessary, and hence implementation of a circuit at high-speed recording operation becomes easy and reliable. Further, an impulse component developing during the initial phase of formation of a mark is attenuated by filtering operation. Therefore, according to the present embodiment, a land prepit signal corresponding to a mark section can be accurately detected during high-speed recording operation without being affected by the impulse components developing during initial phase of formation of a mark. By the thus-detected land prepit, synchronous recording operation can be performed without fail during the high-speed recording operation. Synchronous recording is a scheme for effecting recording operation such that the land prepits are brought into coincidence with a synchronous pattern of a synchronization frame.

If a land prepit can be detected during the mark segment or the space segment, synchronous recording operation is possible, and this has already been known from, e.g., JP-A-2002-216355.

Fig. 1A shows an example write strategy adopted during high-speed recording operation for DVD-R. In Fig. 1A, a vertical axis represents the amplitude of a light beam, and a horizontal axis represents time, wherein Pw denotes recording power corresponding to a mark segment, and Pr denotes reproduction power corresponding to a space segment. Multipulse modulation is usually employed during a low-speed recording operation, but non-multipulse modulation having a substantially M-shaped profile, such as that indicated by a second or third strategy waveform shown in Fig. 1A, is employed during high-speed recording operation.

At the time of recording operations 3T, 4T (T denotes the cycle of one channel clock pulse which is a unit length corresponding to an interval between bits specified by a recording format at the time of recording of recording data) such as those indicated by a first or fourth waveform shown in Fig. 1A, an ordinary single rectangular pulse is output. In contrast, at the time of recording operations 5T to 11T and 14T such as those indicated by a second or third strategy waveform, there is adopted a strategy waveform which sets power lower than the recording power Pw at an intermediate portion and which sets the recording power Pw at the time of rise and fall of the pulse.

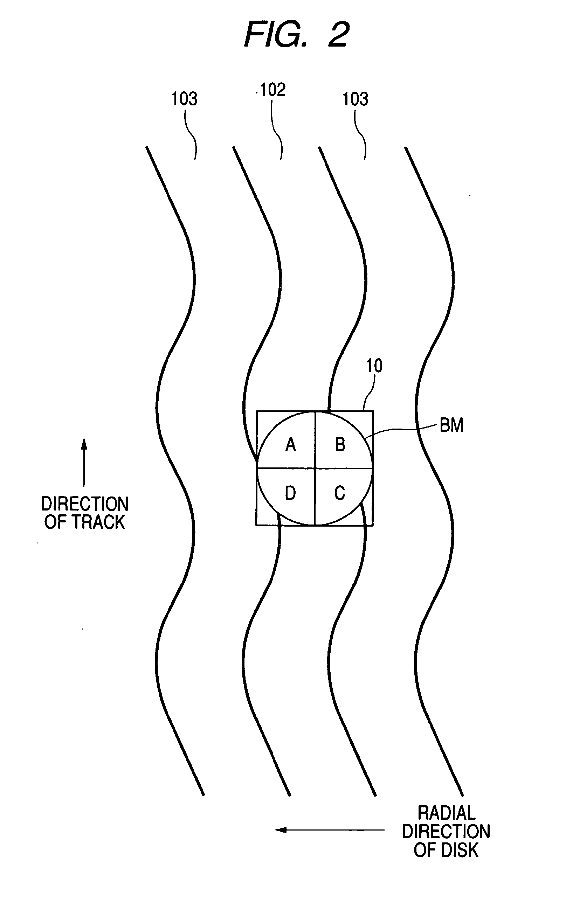

Fig. 1B shows a signal LAD1 formed by: receiving light generated as a result of a laser beam whose intensity has been modified by the write strategy signal shown in Fig. 1A having been reflected from the recording medium, through use of a four-split detector; and adding together two of the four received-light signals. Specifically, as shown in Fig. 2, the four-split detector 10 receives the reflected light consisting of a light beam BM radiated on a groove 102 and a portion of a land 103, both being formed in the recording medium, through use of four regions A to D split by parting lines corresponding to the radial direction of the disk and the direction of the track. Fig. 1B shows the signal LAD1 generated by adding together a received-light signal of the region A and a received-light signal of the region D.

As shown in Fig. 1B, impulse-shaped components TR, which are unique to recording of data on a pigment-based disk, arise in the leading edges of the write strategy shown in Fig. 1A ( in initial phase of formation of a mark). The signal subsequent to the impulse component TR assumes a substantially constant level. The shape of the impulse component TR changes in accordance with a recording speed and also varies slightly in accordance with a recording medium. However, the shape of the impulse component TR is substantially constant without dependence on the length of a mark to be recorded when data are recorded on the same recording medium, and the level of the signal subsequent to the impulse component TR becomes substantially constant until the end of formation of the mark.

Analogous characteristics are exhibited by a signal formed by adding together the received-light signal and the received-light signal, both belonging to the regions B and C from among the four regions A to D.

When such a signal having the impulse components TR is caused to pass through a filter having a constant characteristic, only the impulse components TR can be made essentially uniformly flat (characteristics of the filter will be described later). A signal having passed through the filter is shown in Fig. 1C. As shown in Fig. 1C, after the signal has passed through the filter, the shape of a waveform appearing at an initial phase of the mark section does not become extremely dull and becomes substantially equal to the original signal, thereby rendering the entire mark section flat. The shape of the impulse component TR becomes substantially constant regardless of the length of the mark to be recorded during operation for recording data on a single medium, and hence all mark sections can be made equally flat.

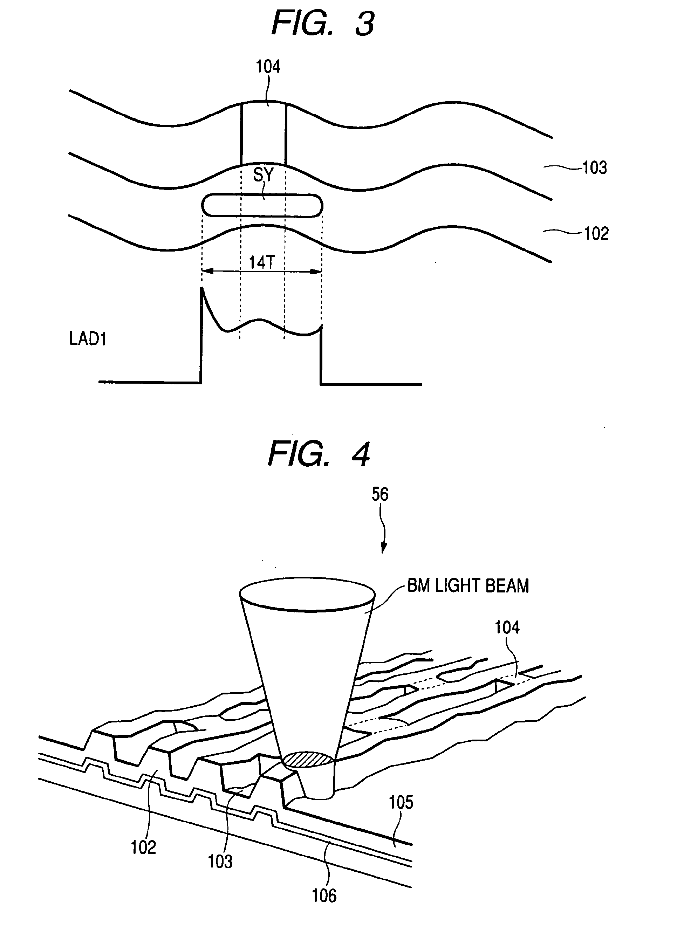

Fig. 3 shows the signal LAD1 appearing when a mark is recorded at the position of a land prepit 104 formed in the land 103. This shows a case where a mark having a duration of 14T is recorded as a synchronous pattern SY of the synchronization frame. The signal LAD1 which appears when a mark is recorded at the position of the land prepit 104 includes a received-light component of the land prepit 104. Further, the level of a portion of the signal LAD1 subsequent to the impulse component TR is not constant, and a center of the portion has a higher level.

When no land prepit is adjacent to the mark, the level achieved at a position subsequent to the impulse component TR becomes stable at a substantially constant level until the end of formation of the mark.

The land prepit signal partially overlapping the mark section has a high level, and the resultant component still remains in the signal even after the signal has been caused to pass through the previously-described filter.

Eventually, even when the radial push-pull signal is generated through use of the filter having a characteristic for rendering the impulse components TR flat, a land prepit used at the time of formation of the mark can be detected from the radial push-pull signal. At this time, the impulse components TR are made flat, and hence erroneous detection of another land prepit can be prevented.

### [First Embodiment]

A first embodiment of the present invention will be described by reference to Figs. 4 through 10. The following embodiment shows a land prepit detecting apparatus for detecting land prepits from a DVD-R or the like, serving as a recording medium (hereinafter called a "disk"), in which address data representing positions on the recording medium where data are to be recorded and a reference signal used for generating a clock signal to be used for recording and reproducing operations are formed in the form of land prepits.

A physical structure of the disk of the first embodiment will first be described by reference to Fig. 4. Fig. 4 is a cross-sectional perspective view of a disk 56 of the first embodiment. The disk 56 is a pigment-based disk which has a pigment film 105 and enables writing of data only one time. Formed in the disk 56 are grooves 102 serving as data tracks on which recording data are to be recorded and lands 103 serving as guide tracks for guiding a light beam BM, such as a laser beam, which has reproduction or recording power to the groove 102. Land prepits 104 are formed in the land 103. The land prepit 104 is formed in a line crossing, at right angles, a tangential direction of the groove 102 such that the land prepits 104 do not oppose each other with the groove 102 interposed therebetween. The disk also has a protective film for protecting the lands, the land prepits, and the grooves, and a reflection film 106 for reflecting the light beam BM at the time of reproduction of recorded data.

In the disk 56, the grooves 102 are wobbled at a frequency which serves as a standard for the rotational speed of the disk 56. When recording data ( i. e. , data to be originally recorded, such as image data, other than preliminary information and a synchronous signal) are recorded on the disk 56, the wobbling frequency of the groove 102 is detected to acquire a synchronous signal, whereupon the disk 56 is rotationally controlled at a predetermined rotational speed. Further, the land prepits 104 are detected, thereby acquiring the preliminary information beforehand. Address data, which indicate a position on the disk 56 where the recording data are to be recorded, are acquired from the preliminary information, and on the basis of the address data the recording data are recorded in a corresponding recording position.

Here, at the time of recording of the recording data, the light beam BM is radiated such that the center of the beam coincides with the center of the groove 102, to thus form a recorded data pit ( i. e. , a mark section) corresponding to the recording data in the groove 102, whereupon the recording data are formed. At this time, as shown in Fig. 4, the size of a light spot is set such that a portion of the spot falls on the land 103 as well as on the groove 102. The preliminary information is detected from the land prepits 104 by the push-pull method through use of reflected light consisting of a portion of the light spot radiated on the land 103, whereby the preliminary information is acquired. Through use of the reflected light consisting of the light spot radiated on the groove 102, a wobbling signal is detected from the groove 102, so that a clock signal to be used for controlling rotation is acquired.

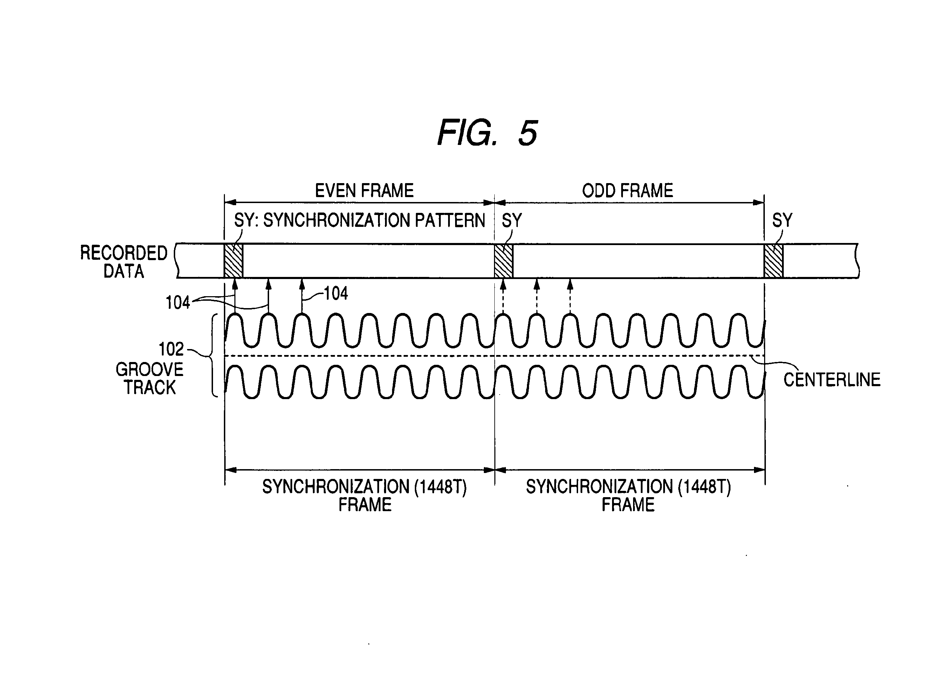

By reference to Fig. 5, there will now be described the preliminary information stored beforehand in the disk 56 shown in Fig. 4 and a format at which the rotational control data are to be recorded. Fig. 5 is a schematic representation showing the preliminary information recorded in the disk 56 beforehand and the format at which the rotation control data are to be recorded. In Fig. 5, an upper row shows a format at which the recording data are to be recorded, and a lower waveform shows a wobbling state of the groove where the recording data are to be recorded (i.e., the plane view of the groove 102). Upward arrows provided between the recording data and the wobbling state of the groove 102 schematically show positions where the land prepits 104 are to be formed. Specifically, the land prepits 104 are formed at positions where wobbling of the groove 102 has the maximum amplitude. In Fig. 5, the wobbling state of the groove 102 is indicated through use of an amplitude which is larger than an actual amplitude, for the sake of easy comprehension, and the recording data are recorded on the center line of the groove 102.

As shown in Fig. 5, the recording data to be recorded on the disk 56 have been divided on a per-synchronization-frame basis in advance. One recording sector, serving as a data unit, is formed from 26 synchronization frames. Moreover, one ECC block, serving as a data block, is formed from 16 recording sectors. One synchronization frame has a length which is 1488 times (1488T) the cycle of one channel clock, wherein the clock is a unit length corresponding to an interval between bits defined by a recording format employed at the time of recording of recording data. Moreover, a synchronization pattern SY to be used for maintaining synchronization on a per-synchronization-frame basis is recorded in a leading portion of one synchronization frame having a length 14T.

The preliminary information recorded in the disk 56 is recorded on a per-synchronization-frame basis. Here, at the time of recording of the preliminary information in the land prepits 104, at least one land prepit 104 is inevitably formed on the land 103 adjacent to the area where the synchronization patterns SY in the synchronization frames of the recording data are to be recorded, as one which indicates a synchronization signal in the preliminary information. Two or one land prepit 104 is formed in the land 103 adjacent to a first half of the synchronization frame other than the synchronization pattern SY as one which indicates contents (i.e., address data) of the preliminary information to be recorded. Depending on the contents of the preliminary information to be recorded, there may be a case where no land prepit 104 is formed in the first half of the synchronization frame other than the synchronization pattern SY. In this case, the land prepits 104 are formed in only the even-numbered synchronous frames (hereinafter referred to as "EVEN frames") in one recording sector, or the land prepits 104 are formed in only the odd-numbered synchronous frames (hereinafter referred to as "ODD frames"), whereby the preliminary information is recorded. Specifically, in Fig. 5, when the land prepits 104 have been formed in the EVEN frame (as indicated by solid upward arrows shown in Fig. 5), no land prepits 104 are formed in adjacent ODD frames.

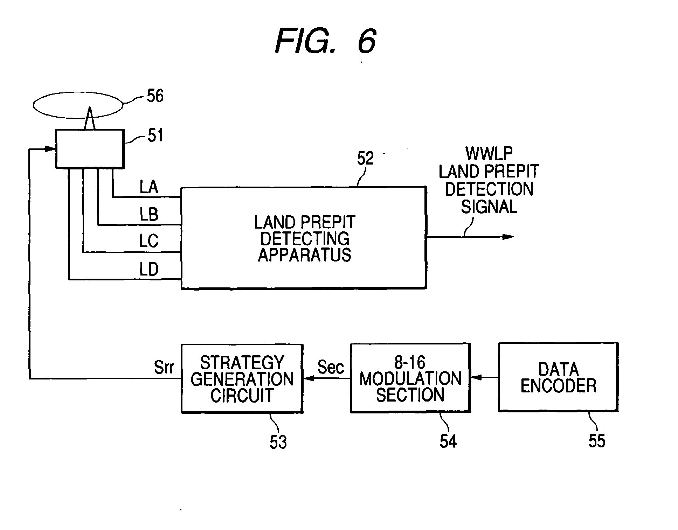

There will now be described the configuration of the recording and reproduction apparatus to which the land prepit detecting apparatus of the first embodiment of the invention is applied. Fig. 6 is a block diagram showing a schematic configuration of a portion of the recording and reproduction apparatus for the disk 56 to which the land prepit detecting apparatus of the first embodiment of the invention is applied, wherein the portion pertains to the land prepit detecting apparatus. The recording and reproduction apparatus comprises the disk 56, a pickup 51, a land prepit detecting apparatus 52, a strategy generation circuit 53, an 8-16 modulation section 54, and a data encoder 55.

The data encoder 55 encodes recording data input from the outside. The 8-16 modulation section 54 subjects the recording data that have been encoded on the basis of the recording clock to 8-16 modulation, thereby generating an NRZI (Non-Return to Zero Invert) signal Sec and outputting the thus-generated NRZI signal Sec to the strategy generation circuit 53. In accordance with the recording clock signal, the strategy generation circuit 53 subjects the NRZI signal Sec to waveform conversion for adjusting the geometry of recording bits to be formed in the disk 56, to thus generate a write strategy signal Srr.

The pickup 51 radiates a light beam whose intensity has been modulated by the write strategy signal Srr on the groove 102 where pits corresponding to the recording data are to be formed, thereby recording on the disk 56 the data to be recorded. Further, the pickup 51 has the four-split detector 10 that is shown in Fig. 2 and serves as a light-receiving element, and the light which consists of the light beam BM and has been reflected from the disk 56 is received by the four-split detector 10. The four-spilt detector 10 outputs received-light signals LA, LB, LC, and LD of the four regions A to D which are split into four in the radial direction of the disk 56 and in the direction of the track.

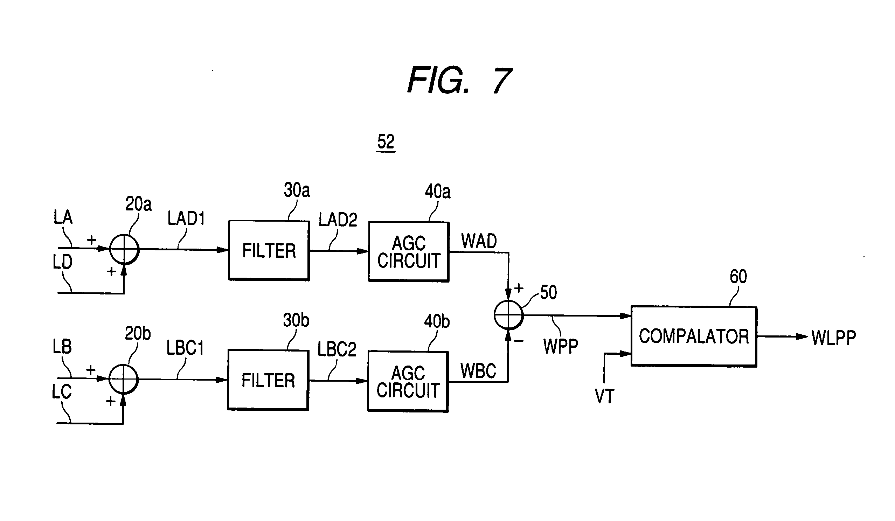

The land prepit detecting apparatus 52 detects a land prepit on the basis of the received-light signals LA, LB, LC, and LD input from the four-split detector 10. Fig. 7 is a block diagram showing the internal configuration of the land prepit detecting apparatus 52 shown in Fig. 6. The land prepit detecting apparatus 52 has two adders 20a, 20b; filters 30a, 30b serving as filtering device; AGC (Automatic Gain Control) circuits 40a, 40b serving as first and second amplitude control device; a subtracter 50 serving as computation device; and a comparator 60 serving as detection device.

The adder 20a adds the received-light signal LA to the received-light signal LD, thereby generating a signal LAD1. The adder 20b adds the received-light signal LB to the received-light signal LC, thereby generating a signal LBC1.

The filter 30a attenuates the impulse components of the signal LAD1, thereby generating the signal LAD2. The filter 30battenuates the impulse components of the signal LBC1, thereby generating a signal LBC2. The filters 30a and 30b have the same filtering characteristic.

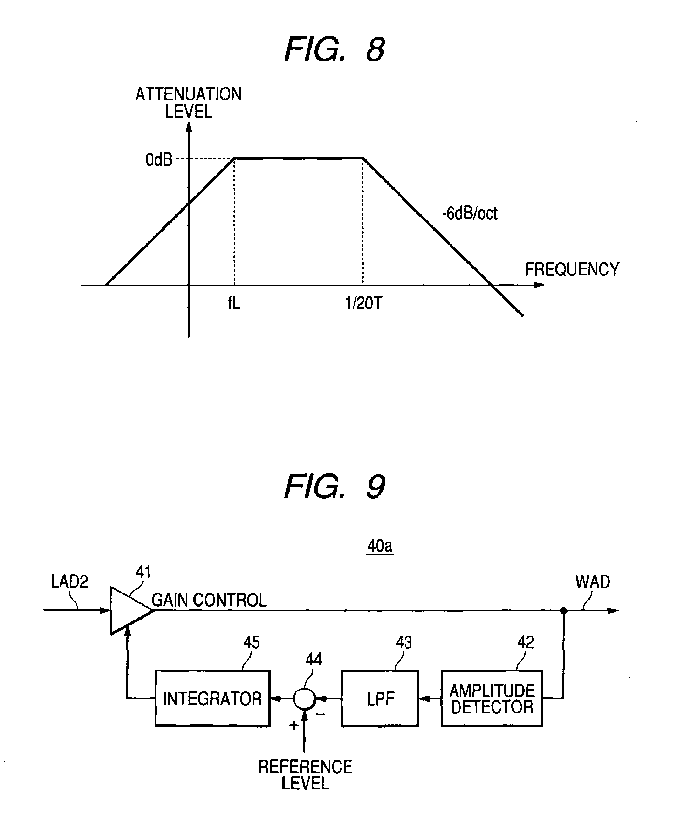

Fig. 8 is a view showing an example of the filtering characteristic of the filter 30a shown in Fig. 7. As shown in Fig. 8, the filter 30a attenuates the impulse components of the signal LAD1 by a primary low-pass filter having a cut-off frequency of 1/20T and an attenuation gradient of -6dB/oct and eliminates fluctuations in the signal LAD1 due to eccentric components of the disk, through use of a high-pass filter having a cut-off frequency of fL. When the recording speed is 1x speed, the cut-off frequency fL of the high-pass filter assumes a value of about 20 kHz, and the cut-off frequency of the low-pass filter assumes a value of about 1.35 MHz. When the recording speed is 8x speed, the cut-off frequency fL of the high-pass filter assumes a value of about 80 kHz, and the cut-off frequency 1/20T of the low-pass filter assumes a value of about 10.8 MHz.

The AGC circuit 40a corrects the amplitude of the signal LAD2 to a predetermined reference value, to thus generate a signal WAD. Fig. 9 is a block diagram showing the configuration of the AGC circuit 40a shown in Fig. 7. The AGC circuit 40a is equipped with a gain control amplifier 41, an amplitude detector 42, a low-pass filter 43, a subtracter 44, and an integrator 45.

The gain control amplifier 41 generates the signal WAD that is formed by correcting the amplitude of the signal LAD2 on the basis of the gain control signal input from the integrator 45.

The amplitude detector 42 detects the amplitude of the signal WAD by holding a peak and a bottom of the signal. The low-pass filter 43 eliminates high-frequency components of the amplitudedetected by the amplitude detector 42. The subtracter 44 generates a gain control signal by subtracting the predetermined reference level from the amplitude from which the high-frequency components have been removed.

The integrator 45 integrates the gain control signal, thereby adjusting the time of the gain control signal output to the gain control amplifier 41. Specifically, the integrator 45 adjusts a response speed of the AGC circuit 40a.

The AGC circuit 40b corrects the amplitude of the signal LBC2 to a predetermined reference value, thereby generating a signal WBC. The configuration of the AGC circuit 40b is analogous to that of the AGC circuit 40a shown in Fig. 9 except for a difference in the predetermined reference value to be used for comparison by the subtracter 44, and hence its explanation is omitted.

In Fig. 7, the subtracter 50 subtracts the signal WBC from the signal WAD, thereby generating the radial push-pull signal WPP. The comparator 60 compares a reference level VT, which is a predetermined reference value to be used for detecting a land prepit, with the radial push-pull signal WPP. When the level of the radial push-pull signal WPP is determined to be higher than the reference level VT as a result of comparison, a signal indicating detection of a land prepit is output as the land prepit detection signal WLPP. When the level of the radial push-pull signal WPP is lower than the reference level VT, a signal indicating a failure to detect a land prepit is output as the land prepit detection signal WLPP. For instance, when the land prepit is detected, the comparator 60 brings the land prepit detection signal WLPP to an "H" position. When no land prepit is detected, the comparator 60 brings the land prepit detection signal WLPP to an "L" position.

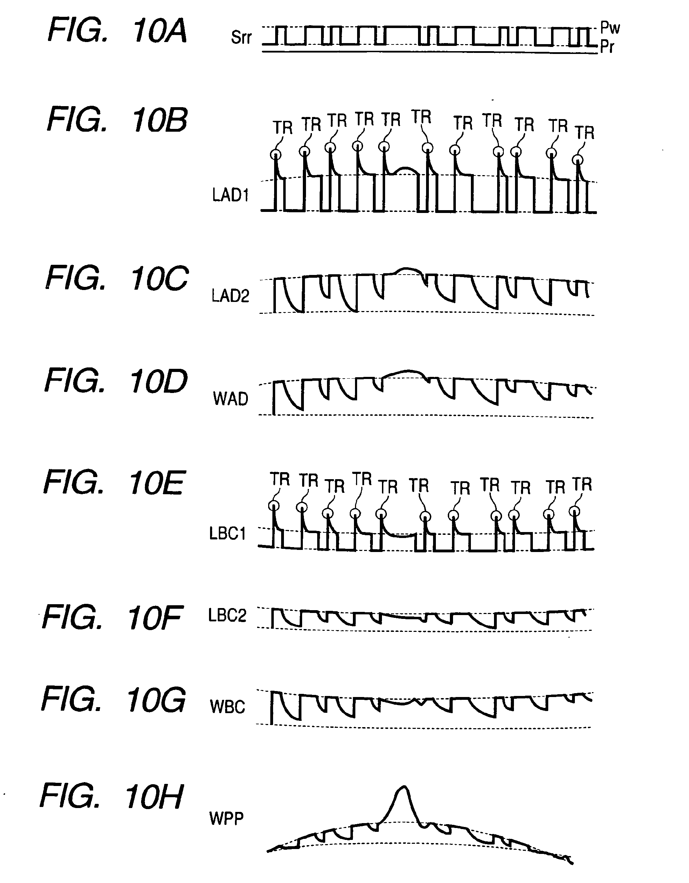

By reference to Fig. 10, operation of the land prepit detecting apparatus according to the first embodiment of the invention will now be described.

The pickup 51 modulates the intensity of the light beam by the write strategy signal Srr shown in Fig. 10A and radiates the light beam BM whose intensity has been modified on the groove 102 where a pit corresponding to the recording data is to be formed, thereby recording on the disk 56 the data to be recorded. The write strategy signal Srr shown in Fig. 10A is modified by non-multipulse modulation. However, for the sake of simplification, a strategy waveform used for recording 5T to 11T and 14T, which have a substantially M-shaped form, is also expressed in the form of a rectangular pulse.

The four-split detector 10 provided in the pickup 51 receives the reflected light consisting of the light beam BM whose intensity has been modified by the write strategy signal Srr shown in Fig. 10A, thereby outputting the received-light signal LA of the region A and the received-light signal LD of the region D to the adder 20a and the received-light signal LB of the region B and the received-light signal LC of the region C to the adder 20b.

The adder 20a adds together the received-light signal LA and the received-light signal LD, to thus generate the signal LAD1. Fig. 10B shows the signal LAD1 generated by the adder 20a. A large impulse component TR develops in the signal LAD1 at a time in point when the write strategy signal Srr shown in Fig. 10A rises (i.e., the initial phase of formation of the mark). The adder 20a outputs the signal LAD1 to the filter 30a.

The adder 20b adds together the received-light signal LB and the received-light signal LC, to thus generate the signal LBC1. Fig. 10E shows the signal LBC1 generated by the adder 20b. As in the case of the signal LAD1 shown in Fig. 10B, a large impulse component TR develops in the signal LBC1 at a time in point when the write strategy signal Srr shown in Fig. 10A rises. The adder 20a outputs the signal LAD1 to the filter 30a. The filter 30a eliminates a component of fL [Hz] or less and a component of 1/20T [Hz] or more, both belonging to the signal LAD1, to thus generate the signal LAD2. Fig. 10C shows the signal LAD2 produced as a result of the filter 30a having eliminated the component of fL [Hz] or less and the component of 1/20T [Hz] or more, both belonging to the signal LAD1 shown in Fig. 10B. As shown in Fig. 10C, the signal LAD2 is formed as a result of elimination of the impulse components TR from the signal LAD1. The filter 30a outputs the signal LAD2 to the gain control amplifier 41 of the AGC circuit 40a.

The filter 30b eliminates a component of fL [Hz] or less and a component of 1/20T [Hz] or more, both belonging to the signal LBC1, to thus generate the signal LBC2. Fig. 10F shows the signal LBC2 produced as a result of the filter 30b having eliminated the frequency component of fL [Hz] or less and the high-frequency component of 1/20T [Hz] or more, both belonging to the signal LBC1 shown in Fig. 10E. As shown in Fig. 10F, the signal LAD2 is formed as a result of elimination of the impulse components TR from the signal LBC1. The filter 30b outputs the signal LBC2 to the gain control amplifier 41 of the AGC circuit 40b.

The gain control amplifier 41 of the AGC circuit 40a corrects the amplitude of the signal LAD2 in accordance with the gain control signal input from the integrator 45 of the AGC circuit 40a, to thus generate the signal WAD. The signal WAD is output to the amplitude detector 42 of the AGC circuit 40a and the subtracter 50.

The amplitude detector 42 of the AGC circuit 40a detects the amplitude of the signal WAD by holding a peak and a bottom of the signal and outputs the thus-detected amplitude to the low-pass filter 43 of the AGC circuit 40a. The low-pass filter 43 of the AGC circuit 40a eliminates a high-frequency component of the amplitude detected by the amplitude detector 42 of the AGC circuit 40a and outputs the amplitude from which the high-frequency component has been removed to the subtracter 44 of the AGC circuit 40a.

The subtracter 44 of the AGC circuit 40a subtracts the predetermined reference level from the amplitude from which the high-frequency component has been removed, to thus generate the gain control signal. The thus-generated gain control signal is output to the integrator 45 of the AGC circuit 40a. The integrator 45 of the AGC circuit 40a integrates the gain control signal, thereby controlling the time of the gain control signal, and outputs the gain control signal to the gain control amplifier 41 of the AGC circuit 40a.

Fig. 10D shows the signal WAD that has undergone amplitude correction performed by the AGC circuit 40a. As shown in Fig. 10D, the amplitude of the signal LAD2 is corrected.

The AGC circuit 40b corrects the amplitude of the signal LAD2 to a predetermined reference value, to thus generate the signal WBC. Internal operation of the AGC circuit 40b becomes identical with that of the previously-described AGC circuit 40a, and hence its explanation is omitted here. Fig. 10G shows the signal WBC that has undergone amplitude correction performed by the AGC circuit 40b. As shown in Fig. 10G, the amplitude of the signal LBC2 is corrected, to thus become equal to the amplitude of the signal WAD shown in Fig. 10D. Consequently, a ratio of the amplitude of the signal LAD1 to that of the signal LBC2, which are origins of the push-pull signals caused by misalignment of the optical axis, is corrected, whereby the corrected signals WBC, WAD having substantially the same amplitude can be obtained.

The subtracter 50 generates the radial push-pull signal WPP by subtracting the signal WBC from the signal WAD. Fig. 10H shows the radial push-pull signal WPP. The impulse components TR included in the signal LAD1 and the second signal LBC2 are made flat by the filters 30a and 30b. Therefore, unwanted components which are larger than an upper envelope of the wobble signal indicated by dotted lines are eliminated from the radial push-pull signal WPP shown in Fig. 10H, with the exception of the land prepits. The subtracter 50 outputs the radial push-pull signal WPP to the comparator 60.

The comparator 60 compares the predetermined reference level VT to be used for detecting land prepits with the radial push-pull signal WPP. When the result of comparison shows that the level of the radial push-pull signal WPP is higher than the reference level VT, the land prepit detection signal WLPP indicating detection of a land prepit is output to an unillustrated recording clock generation LPP PLL (Phase-locked Loop) section. When the level of the radial push-pull signal WPP is lower than the reference level VT, the land prepit detection signal WLPP indicating a failure to detect a land prepit is output to the unillustrated recording clock generation LPP PLL section. The PLL section for LPP generates a recording clock signal, which is to act as a reference for recording data on the disk 56, in accordance with the land prepit detection signal WLPP.

As mentioned previously, in the first embodiment, the filter 30a generates the signal LAD2 from which the impulse components TR included in the signal LAD1 have been removed, and the filter 30b generates the signal LBC2 from which the impulse components TR included in the signal LBC1 have been removed. A land prepit located in the mark segment is detected on the basis of the radial push-pull signal WPP and through use of the signals LAD2 and LBC2 from which the impulse components TR have been removed. Even during a high-speed recording operation, such as a 4x recording operation, 8x recording operation, or 16x recording operation, land prepits can be detected accurately.

In the first embodiment, the AGC circuits 40a, 40b adjust the amplitudes of the signals LAD2, LBC2 from which the filters 30a, 30b have removed the impulse components TR. Therefore, the requirements for the amplitude detectors 42 in the AGC circuits 40a, 40b are to detect the amplitudes of the signals WAD, WBC which are free from impulse components. Since the amplitudes of the signals can be detected accurately by holding peaks, operations of the AGC circuits 40a, 40b become stable, and accurate amplitude control can be performed.

In the first embodiment, the filters 30a, 30b are configured to have a filtering characteristic shown in Fig. 8. Specifically, the cut-off frequency of the low-pass filter for eliminating impulse components is set to 1/20T. Therefore, as shown in Fig. 10H, in the segments other than the location of the land prepit there can be generated the radial push-pull signal WPP, wherein the mark section is made evenly uniform, and noise components larger than the upper envelope of the wobble signal indicated by dotted lines have been removed.

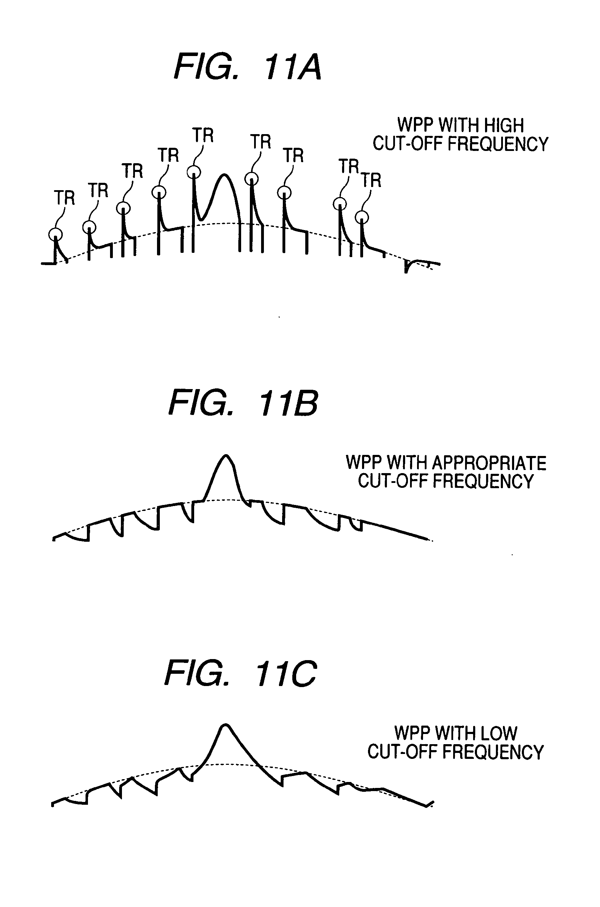

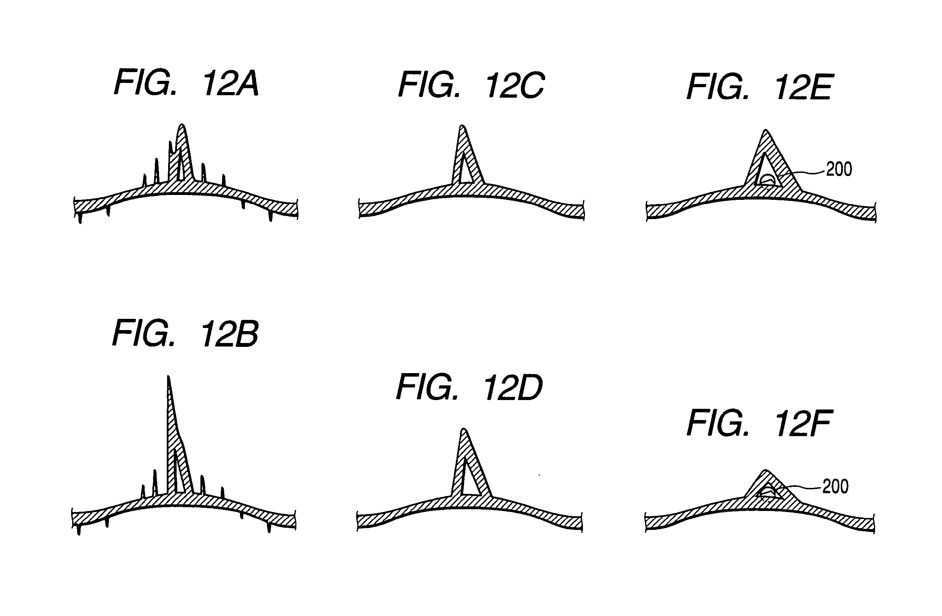

By reference to Figs. 11A to 11C and Figs. 12A to 12F, the radial push-pull signal WPP will now be described in connection with a case where the cut-off frequency of the low-pass filter for removing impulse components is higher than a level required to make the mark section flat, where the cut-off frequency is appropriate; and where the cut-off frequency is lower than the required level. Figs. 11A to 11C show the radial push-pull signals WPP obtained when three different types of cut-off frequencies are set. Figs. 12A to 12F diagrammatically show waveforms obtained when the radial push-pull signals WPP located in the vicinity of the synchronization pattern during the synchronized recording operation (when recording operation is performed such that the synchronization pattern of the synchronization frame is brought into conformance to the land prepit) are observed through use of an oscilloscope.

### (When the cut-off frequency is higher than the level required to make the mark section flat)

The filters 30a and 30b cannot sufficiently eliminate the impulse components from the signals LAD1 and LBC1. Therefore, the filters 30a and 30b output the signals LAD2 and LBC2, which still include the impulse components, to the AGC circuits 40a, 40b. Therefore, the signals WAD and WBC, which still include the impulse components, are generated. Therefore, as shown in Fig. 11A, the impulse components still remain in the radial push-pull signal WPP.

When the radial push-pull signal WPP in which such impulse components still remain is observed through use of an oscilloscope, pulse-like noise arises in areas of the signal other than the land prepit, as shown in Fig. 12A, when the land prepit is located at the center of the synchronization pattern. When the noise level has become higher than the reference level VT of the comparator 60, the noise is erroneously detected as land prepits.

When the impulse components still remain in the radial push-pull signal WPP and when the land prepit is located at a position ahead of the synchronization pattern, the impulse component is multiplied by the component of the land prepit. As a result, as shown in Fig. 12B, the portion of the radial push-pull signal WPP, where the land prepit is located, becomes drastically larger. In such a case, setting of the reference level VT of the comparator 60 becomes difficult.

### (When the cut-off frequency is appropriate)

When the cut-off frequency of the low-pass filter to be used for eliminating the impulse components assumes an appropriate value, the filters 30a, 30b render the impulse components of the signals LAD1 and LBC1 flat. Therefore, as shown in Fig. 11B, noise components larger than the upper envelope of the wobble signal are eliminated from the radial push-pull signal WPP, with the exception of the land prepit. When such a radial push-pull signal WPP is observed through use of the oscilloscope and the land prepit is located at the center of the synchronization pattern, noise components other than the land prepits do not arise, as shown in Fig. 12C. Therefore, the comparator 60 can accurately detect the land prepit.

In relation to the radial push-pull signal WPP whose impulse components higher than the upper envelope of the wobble signal are made flat, even when the land prepit is located at a position forward of the synchronization pattern, the influence of the impulse component is reduced, as shown in Fig. 12D. Hence, the portion of the signal where the land prepit is located does not become excessively large. Consequently, in this case, setting of the reference level VT of the comparator is easy.

### (When the cut-off frequency is lower than the level required to make the mark section flat)

The filters 30a and 30b output the signals LAD2 and LBC2, whose impulse components have undergone overcorrection, to the AGC circuits 40a and 40b. Therefore, the signals WAD and WBC, whose impulse components have undergone overcorrection, are generated. Consequently, as shown in Fig. 11C, the radial push-pull signal WPP is not flat but rise upwardly with reference to the upper envelope of the wobble signal during the period of generation of a mark. In a case where the land prepit is located at the center of the synchronization pattern, when such a radial push-pull signal WPP is observed through use of an oscilloscope, a rightwardly-rising waveform 200 appears in a portion of the signal where no land prepit exists, as shown in Fig. 12E. As a result, the comparator 60 erroneously detects the rightwardly-rising waveform 200 as a land prepit.

In relation to the radial push-pull signal WPP which is not flat with reference to the upper envelope of the wobble signal and rises rightwardly, when the land prepit is located at a position forward of the synchronization pattern, the portion of the signal where the land prepit exists becomes extremely small, and hence detection of the radial push-pull signal as a land prepit becomes impossible, as shown in Fig. 12F.

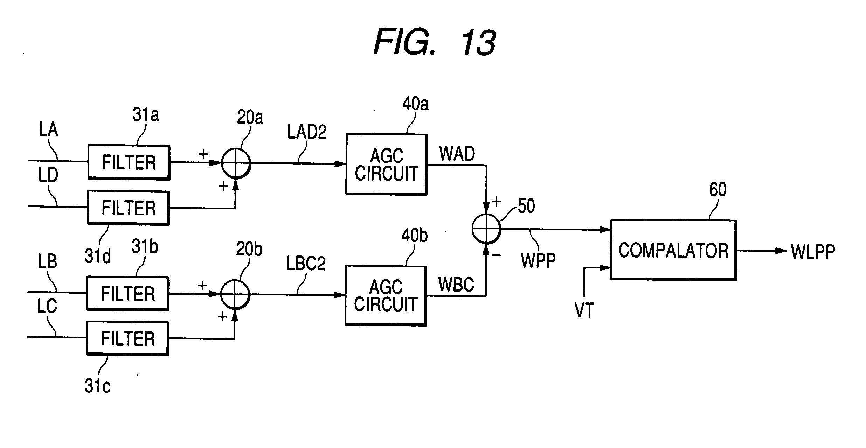

In the first embodiment, the f ilters 30a, 30b for rendering the impulse components flat are provided in a stage before the AGC circuits 40a, 40b. However, as shown in Fig. 13, filters 31a to 31d having the same filtering characteristic as those of the filters 30a, 30b may be disposed in a stage before the adders 20a, 20b. Specifically, impulse components are removed from the received-light signals LA to LD which have been received by the four regions A to D and input from the four-split detector 10. As a result, the adders 20a and 20b add together the received-light signals which are free of impulse components. Signals analogous to the signals LAD2 and LBC2, which are shown in Figs. 10C and 10D, can be output to the AGC circuits 40a, 40b. Consequently, even in this case, there can be yielded the same advantage as that yielded by the land prepit detecting apparatus 52 shown in Fig. 7.

### [Second Embodiment]

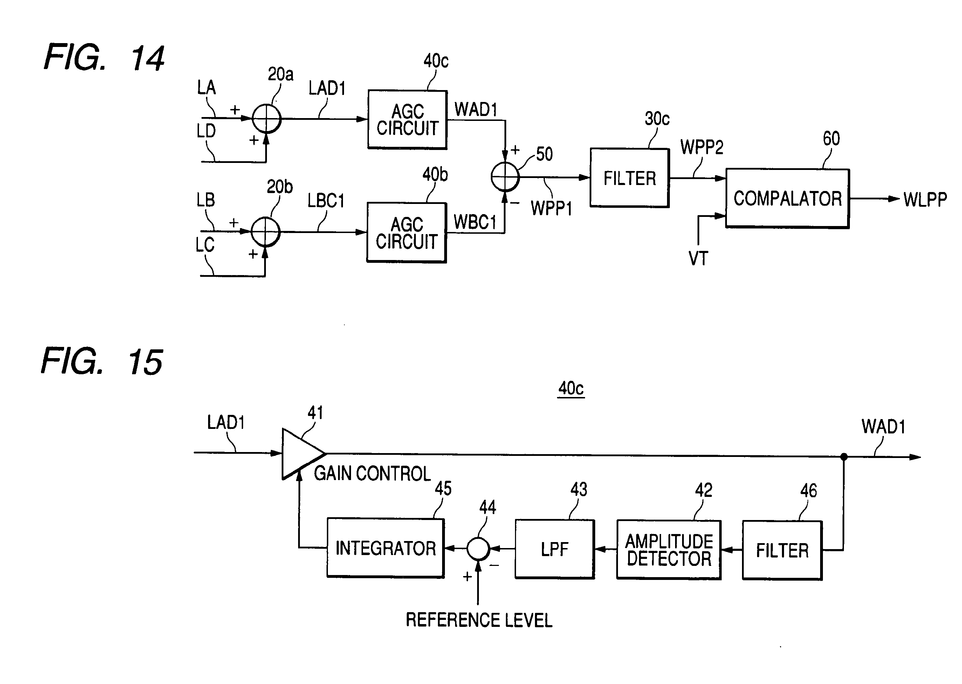

A second embodiment of the present invention will be described by reference to Figs. 14 and 15. In the first embodiment, the impulse components are eliminated before the amplitude of the signal is adjusted through use of the AGC circuits 40a, 40b. However, the filtering operation for eliminating impulse components can be inserted to any arbitrary position, so long as the position is located before the comparator 60 which compares the radial push-pull signal with the predetermined reference level to be used for detecting a land prepit. In the second embodiment, the radial push-pull signal is generated while still including the impulse components, and the impulse components are eliminated immediately before comparison of the signal with the predetermined reference level.

Fig. 14 is a block diagram showing the internal configuration of the land prepit detecting apparatus of the second embodiment of the invention. The land prepit detecting apparatus of the second embodiment has a filter 30c interposed between the subtracter 50 and the comparator 60, and, in place of the AGC circuits 40a, 40b, AGC circuits 40c, 40d constituting another internal configuration. Those constituent portions which have the same functions as those of the land prepit detecting apparatus 52 of the first embodiment shown in Fig. 7 are assigned the same reference numerals, and their repeated explanations are omitted.

The AGC circuit 40c corrects the amplitude of the signal LAD1 to the predetermined reference value, to thus generate a signal WAD1. Fig. 15 is a block diagram showing the internal configuration of the AGC circuit 40c shown in Fig. 14. In the AGC circuit 40c, a filter 46 serving as a filtering section is added to a stage in front of an amplitude detector 42 of the AGC circuit 40a shown in Fig. 9. Those constituent portions which have the same functions as those of the AGC circuit 40a shown in Fig. 9 are assigned the same reference numerals, and their repeated explanations are omitted.

As shown in Fig. 10B, the signal LAD1 includes impulse components TR. Therefore, the signal WAD1 formed as a result of the amplitude of the signal LAD1 being corrected also includes the impulse components. Since the impulse components have an impulse-shaped profile, the amplitude detector 42 cannot detect an accurate amplitude of the signal WAD1 through peak holding operation. For this reason, the gain control signal for controlling the gain control amplifier 41 becomes unstable, and hence correction of amplitude of the signal LAD1 cannot be performed accurately. A filter 46 having the filtering characteristic as that shown in Fig. 8 is provided in a stage in front of the amplitude detector 42, thereby eliminating the impulse components from the signal WAD1. As a result, a signal equivalent to the signal LAD2 of the first embodiment is input to the amplitude detector 42, thereby enabling accurate correction of the amplitude.

The AGC circuit 40d corrects the amplitude of the signal LBC1 to the predetermined reference value, to thus generate a signal WBC1. The configuration of the AGC circuit 40d is analogous to that of the AGC circuit 40c shown in Fig. 15, except that the predetermined reference level to be used for comparison performed by the subtracter 44 is different, and hence its explanation is omitted here.

As mentioned previously, the signals WAD1 and WBC1 include the impulse components. Therefore, a radial push-pull signal WPP1 generated by subtracting the signal WBC1 from the signal WAD1 through use of the subtracter 50 also includes the impulse components. The filter 30c has the same filtering characteristic as that shown in Fig. 8 and eliminates the impulse components from the radial push-pull signal WPP1. As a result, in segments other than the location of the land prepit there is produced a radial push-pull signal WPP2 from which the impulse components larger than the upper envelope of the wobble signal are eliminated.

Operation of the land prepit detecting apparatus according to the second embodiment of the present invention will now be described. The adder 20a adds together the received-light signals LA and LD, to thus generate the signal LAD1. The signal LAD1 is output to the AGC circuit 40c.

The gain control amplifier 41 of the AGC circuit 40c corrects the amplitude of the signal LAD1 in accordance with the gain control signal input from the integrator 45 of the AGC circuit 40c and outputs the signal WAD1 to the filter 46 of the AGC circuit 40c and the subtracter 50.

The filter 46 of theAGC circuit 40c eliminates the impulse components included in the signal WAD1. The signal WAD1 from which the impulse components have been removed is output to the amplitude detector 42 of the AGC circuit 40c.

The amplitude detector 42 of the AGC circuit 40c detects the amplitude of the signal WAD1, from which the impulse components have been removed, by holding a peak and a bottom and outputs the thus-detected amplitude to the low-pass filter 43 of the AGC circuit 40c. The low-pass filter 43 of the AGC circuit 40c eliminates high-frequency components from the amplitude detected by the amplitude detector 42 of the AGC circuit 40c and outputs the amplitude, from which the high-frequency components have been removed, to the subtracter 44 of the AGC circuit 40c.

The subtracter 44 of the AGC circuit 40c subtracts the predetermined reference level from the amplitude from which the high-frequency components have been removed, to thus generate the gain control signal, and outputs the gain control signal to the integrator 45 of the AGC circuit 40c. The integrator 45 of the AGC circuit 40c integrates the gain control signal, to thus adjust the time of the gain control signal, and outputs the gain control signal to the gain control amplifier 41 of the AGC circuit 40c. Consequently, although the signal WAD1 output from the AGC circuit 40c includes the impulse components, the amplitude is controlled so as to become substantially equivalent to the reference level of the signal amplitude from which the impulse components have been removed.

The adder 20b adds together the received-light signal LB and the received-light signal LC, to thus generate a signal LBC1. The signal LBC1 is output to the AGC circuit 40d.

The AGC circuit 40d corrects the amplitude of the signal LBC1 to the predetermined reference level, to thus generate the signal WBC1. Internal operation of the AGC circuit 40d is analogous to that of the previously-described AGC circuit 40c, and hence its explanation is omitted. Consequently, although the signal WBC1 output fromtheAGC circuit 40d includes the impulse components, the amplitude is controlled so as to become substantially equivalent to the reference level of the signal amplitude from which the impulse components have been removed.

The subtracter 50 subtracts the signal WBC1 from the signal WAD1, to thus generate the radial push-pull signal WPP1. The radial push-pull signal WPP1 is output to the filter 30c.

The filter 30c makes the impulse components of the radial push-pull signal WPP1 flat, whereby there is generated a radial push-pull signal WPP2 in which noise components larger than the upper envelope of the wobble signal are eliminated from the signal, with the exception of a land prepit. The radial push-pull signal WPP2 is output to the comparator 60.

The comparator 60 compares the reference level VT serving as a predetermined reference to be used for detecting a land prepit with the radial push-pull signal WPP. When the result of comparison shows that the level of the radial push-pull signal WPP is higher than the reference level VT, the land prepit detection signal WLPP indicating detection of a land prepit is output to an unillustrated recording clock generation LPP PLL section. When the level of the radial push-pull signal WPP is lower than the reference level VT, the land prepit detection signal WLPP indicating a failure to detect a land prepit is output to the recording clock generation LPP PLL.

As mentioned previously, in the second embodiment, the filter 30c generates the radial push-pull signal WP2 from which the impulse components included in the signal WPP1 have been removed. A land prepit located in the mark segment is detected on the basis of the radial push-pull signal WPP2 from which the impulse components have been removed. Hence, even during a high-speed recording operation, such as a 4x recording operation, 8x recording operation, or 16x recording operation, land prepits can be detected accurately.

The filter 46 for eliminating impulse components is provided in each of the AGC circuits 40c, 40d, to thereby detect the amplitude of the signal WAD1 and that of the signal WBC1, from which the impulse components have been removed. Hence, accurate amplitude control can be performed without being affected by the influence of the impulse components.

### [Third Embodiment]

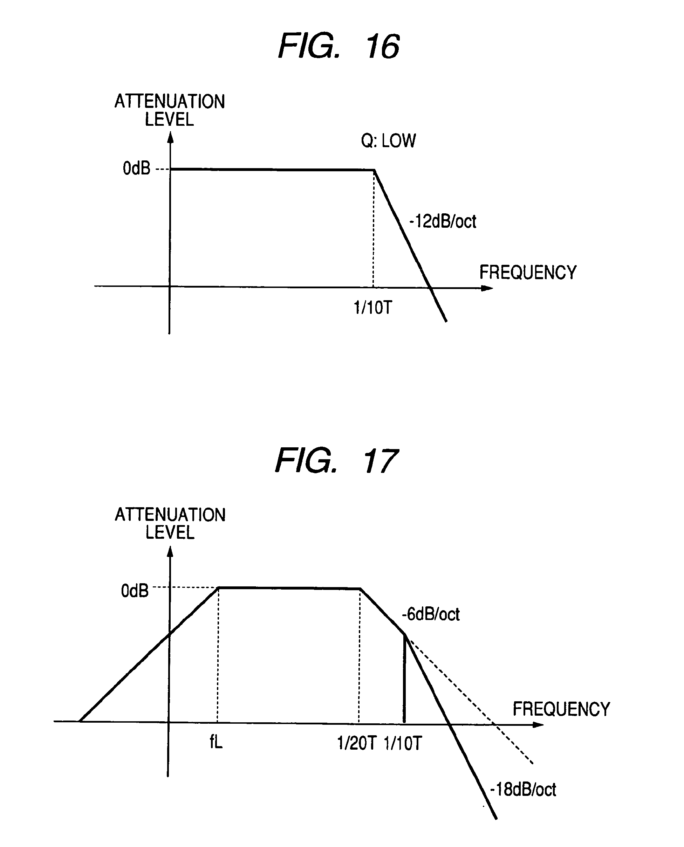

A third embodiment of the invention will be described by reference to Figs. 16 through 19. The third embodiment describes the characteristic of the filter to be used for eliminating the impulse components.

In the first and second embodiments, as shown in Fig. 8, the impulse components of the signal LAD1 are attenuated by the primary low-pass filter having a cut-off frequency of 1/20T and an attenuation gradient of -6dB/oct. Further, variations in the signal LAD1 attributable to the eccentric component of the disk are eliminated by a high-pass filter having a cut-off frequency fL.

A secondary low-pass filter having a characteristic such as that shown in Fig. 16 is added to the filter shown in Fig. 8. The filtering characteristic shown in Fig. 16 is as follows: a Q value, which is one factor of a transmission characteristic, being set to a small value; the cut-off frequency being set to 1/10T, which is substantially equal to the fundamental frequency of the land prepit; and the attenuation gradient being set to -12dB/oct, which is steeper than the filtering characteristic shown in Fig. 8. Specifically, the filter intended for eliminating impulse components is additionally provided with the secondary filter for eliminating noise components higher than the fundamental frequency of the land prepit.

Fig. 17 shows a general filtering characteristic achieved as a result of the filter shown in Fig. 16 having been added to the filter shown in Fig. 8. According to the filtering characteristic shown in Fig. 17, as a result of addition of the secondary low-pass filter having the Q value set to a small value, the cut-off frequency set to 1/10T, and the attenuation gradient of -12dB/oct, the slope of the attenuation gradient from 1/10T, which is substantially equal to the fundamental frequency of the land prepit, becomes greater than the attenuation gradient of a frequency region lower than 1/10T. In this case, the attenuation gradient ranges from -6dB/oct to -18dB/oct. Specifically, there can be generated a radial push-pull signal from which the impulse components have been removed and from which the noise components higher than the frequency of the land prepit have been eliminated, without involvement of an extreme attenuation in the amplitude of the land prepit. As a result of a filter having such a filtering characteristic being used as a filter for eliminating impulse components, erroneous detection of a land prepit, which would otherwise be caused by unwanted noise, can be suppressed to a much greater extent.

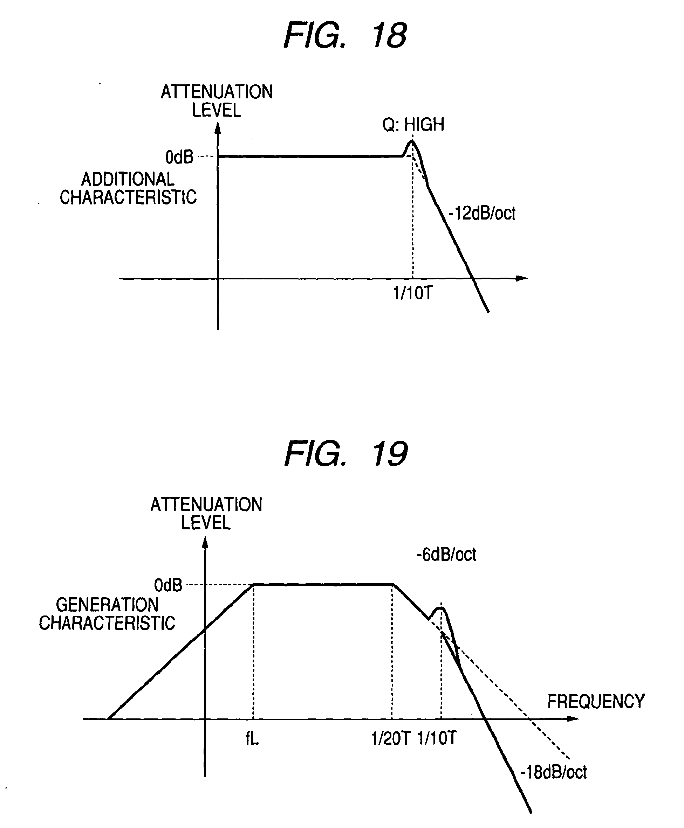

As shown in Fig.18, there may also be added a secondary low-pass filter, wherein the Q value is set to a large value; the cut-off frequency is set to 1/10T; and the attenuation gradient is -12 dB/oct. According to the filtering characteristic shown in Fig. 18, the cut-off frequency is set to 1/10T, which is substantially equal to the fundamental frequency of the land prepit, and the Q value is set to a large value. Hence, the land prepit component included in the radial push-pull signal becomes greater, and frequency components higher than the frequency of the land prepit can be eliminated.

Fig. 19 shows a filtering characteristic achieved as a result of the filtering characteristic shown in Fig. 18 having been added to the filtering characteristic shown in Fig. 8. According to the filtering characteristic shown in Fig. 19, as a result of addition of the secondary low-pass filter having the Q value set to a large value, the cut-off frequency set to 1/10T, and the attenuation gradient of -12dB/oct, the slope of the attenuation gradient from 1/10T, which is substantially equal to the fundamental frequency of the land prepit, becomes greater than the attenuation gradient of a frequency region lower than 1/10T. Further, the amplitude characteristic of 1/10T substantially equivalent to the fundamental frequency of the land prepit is increased. As a result, there can be generated a radial push-pull signal which renders the impulse components flat; which has a large amplitude of a land prepit; and from which the noise components higher than the frequency of the land prepit have been eliminated. As a result of a filter having such a filtering characteristic being used as a filter for eliminating impulse components, the noise components are reduced, and the land prepit becomes much greater. Hence, a margin for detecting a land prepit can be made greater.

The embodiments have been described thus far, but the present invention is not limited to these embodiments and is susceptible to various modifications which are conceivable within the scope of the gist of the invention. As a matter of course, the disk recording medium is not limited to a DVD-R or DVD-RW.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A land prepit detecting apparatus which radiates a light beam corresponding to a recording signal onto a recording medium having recording tracks and land prepits previously formed thereon, to thus detect said land prepits, the apparatus comprising:
first and second light-receiving elements which are divided at least into sub-divis ions by split lines corresponding to the direction of said recording track and which receive reflected light formed from said light beam radiated onto said recording medium;
a generation device for generating a radial push-pull signal on the basis of outputs from said first and second light-receiving elements;
a detection device which compares said radial push-pull signal with a predetermined reference value, to thereby detect said land prepit during a period of irradiation of said light beam to be used for forming a mark section in said recording track; and
a filtering device which is interposed between the first and second light-receiving elements and said detection device and which attenuates an impulse component developing in association with a variation in said recording signal.

2. The land prepit detecting apparatus according to claim 1, further comprising:
a first and second amplitude control device for controlling, to a predetermined amplitude, the amplitudes of received-light outputs from said first and second light-receiving elements.

3. The land prepit detecting apparatus according to claim 2, wherein
said filtering device corresponds to first and second filters provided at a stage before the first and second amplitude control device.

4. The land prepit detecting apparatus according to claim 2, wherein
said first and second amplitude control device have a filter section for attenuating impulse components included in an input of said recording signal in association with changes in said recording signal, and
said filtering device is interposed between said generation device and said detection device.

5. The land prepit detecting apparatus according to claim 1, wherein
said filtering device is a low-pass filter having a predetermined cut-off frequency.

6. A land prepit detecting method comprising the steps of:
radiating a light beam corresponding to a recording signal onto a recording medium having recording tracks and land prepits previously formed thereon;
receiving reflected light formed from said light beam radiated onto said recording medium, through use of light-receiving elements which are divided at least into sub-divisions by split lines corresponding to the direction of said recording track;
generating a radial push-pull signal on the basis of outputs from said first and second light-receiving elements;
attenuating an impulse component developing in association with a variation in said recording signal through filtering operation; and
detecting said land prepit during a period of irradiation of said light beam to be used for forming a mark section in said recording track by comparing said radial push-pull signal with a predetermined reference value.
